# EUROPÄISCHE PATENTANMELDUNG

(11) **EP 0 990 580 A2**
(43) Veröffentlichungstag der Anmeldung: **05.04.2000**
(21) Anmeldenummer: 99118240.3
(22) Anmeldetag: 14.09.1999
(51) Int. Cl.: B62J 9/00, B62J 11/00

(54) **Behälter zum Transport kleinerer Gegenstände mit dem Fahrrad**

(30) Priorität: 01.10.1998 DE 29817570 U
(71) Anmelder: hedy-med Pflegehilfsmittel Vertriebs GmbH, 89520 Heidenheim (DE)
(72) Erfinder: Schulz, Stephan, 89555 Steinheim (DE); Mayer, Andreas, 89551 Königsbronn (DE)
(74) Vertreter: Frank, Gerhard, Dipl.-Phys.

(57) **Zusammenfassung**

Ein Behälter zum Transport kleinerer Gegenstände mit dem Fahrrad besteht aus einem im wesentlichen zylindrischen Gehäuse (10), dessen Aussenabmessungen so gewählt sind, dass es in eine Fahrrad-Flaschenhalterung einsetzbar ist. Durch diese Formgebung ist es möglich, eine bereits vorhandene Fahrrad-Flaschenhalterung immer dann zu verwenden, wenn keine Trinkflasche transportiert werden soll.

Die Öffnung dieses Gehäuses kann beispielsweise durch Aufklappen in zwei halbzylindrische Schalen erfolgen, die über einen in der Längsachse der Fahrrad-Trinktlasche liegenden Schraubverschluss verbindbar sind.

## Beschreibung

Die Erfindung betrifft einen Behälter zum Transport kleinerer Gegenstände mit dem Fahrrad.

Es sind verschiedenartige Behälter in Form von Taschen, Werkzeugtaschen oder ähnlichem bekannt, in denen insbesondere bei längeren Fahrradtouren Gegenstände transportiert werden können. Der Erfindungsgedanke beschäftigt sich hier insbesondere mit solchen Gegenständen, die zur medizinischen Versorgung notwendig werden können (z.B. Pflaster, Salben, Desinfektionsmittel usw.), insbesondere bei einem Unfall mit dem Fahrrad, aber auch kleinere Gegenstände des täglichen Bedarfs wie Papiertaschentücher, Hausschlüssel o.ä., die erfahrungsgemäß entweder gerne vergessen werden oder in hierfür nicht geeigneten Transportbehältern mitgenommen werden.

Aufgabe der Erfindung ist es, für diesen Zweck einen besonders praktischen Behälter zu definieren, der einfach bedienbar, robust und widerstandsfähig ist.

Erfindungsgemäß wird diese Aufgabe gemäß dem kennzeichnenden Teil des Schutzanspruchs 1 gelöst.

Die Grundidee der Erfindung besteht also darin, einem Behälter in seinem geschlossenen Zustand die äußere Form einer Fahrradtrinkflasche zu geben, wodurch damit auch die Halterung des Behälters am Fahrrad in der dafür vorgesehenen Fahrrad- Flaschenhalterung festgelegt ist. Die Erfindung geht dabei von der Überlegung aus, daß ein solcher Behälter entweder mit separater Fahrrad-Flaschenhalterung verwendet wird, die hierfür auch angeboten werden soll, oder daß er in eine bereits vorhandene Fahrrad- Flaschenhalterung eingesetzt wird, da erfahrungsgemäß gefüllte Trinkflaschen bei kleineren Fahrradtouren von der Mehrzahl der Benutzer nicht benötigt werden.

Gemäß einer besonders bevorzugten Ausgestaltung der Erfindung ist dieses im wesentlichen zylindrische Gehäuse in Fahrrad -Trinkflaschenform entlang einer Mantellinie in zwei Hälften haltbar oder klappbar ausgestaltet, so daß zwei halbzylindrische Schalen zur Verfügung stehen, in die eine entsprechende Anzahl der jeweils gewünschten Gegenstände insbesondere hygienisch-medizinischer Natur eingelegt und untergebracht werden kann.

Bei dieser Lösung ist zweckmässigerweise auch ein einer "echten" Fahrrad-Trinkflasche nachempfundener Schraubverschluß vorgesehen, der über einen stirnseitigen Stutzen schraubbar ist, dessen zwei Hälften jeweils einstückig mit den genannten beiden Hälften des Gehäuses ausgeführt sind, so daß mit diesem Schraubverschluß die beiden Gehäusehälften ggf. auch ohne zusätzliche Verschlußelemente zusammengehalten werden.

Weitere Ausgestaltungen des erfindungsgemäßen Behälters sind weiteren Unteransprüchen zu entnehmen. Ein bevorzugtes Ausführungsbeispiel wird nun anhand der Zeichnungen näher erläutert. Es zeigen:

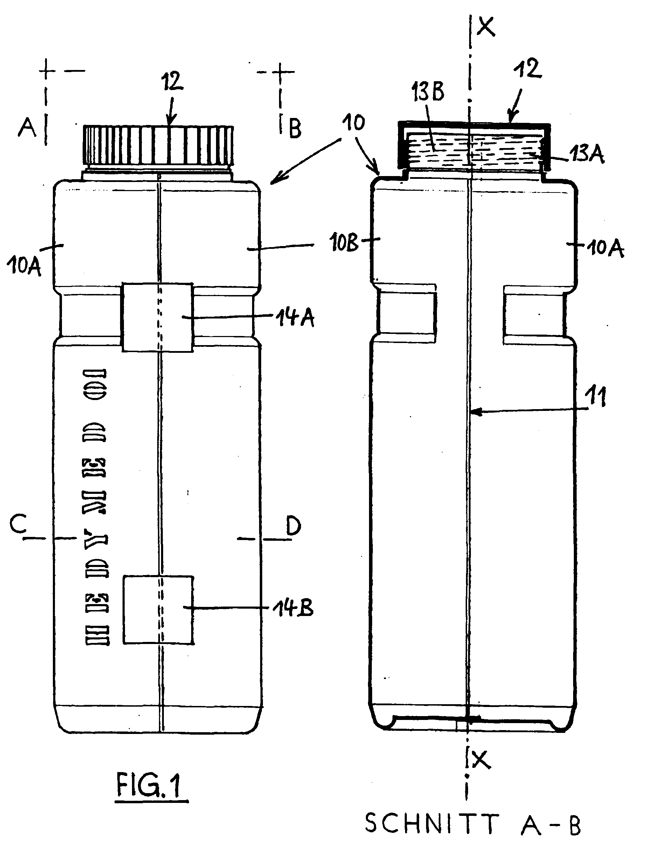

- Fig. 1: zwei Seitenansichten des Behälters,

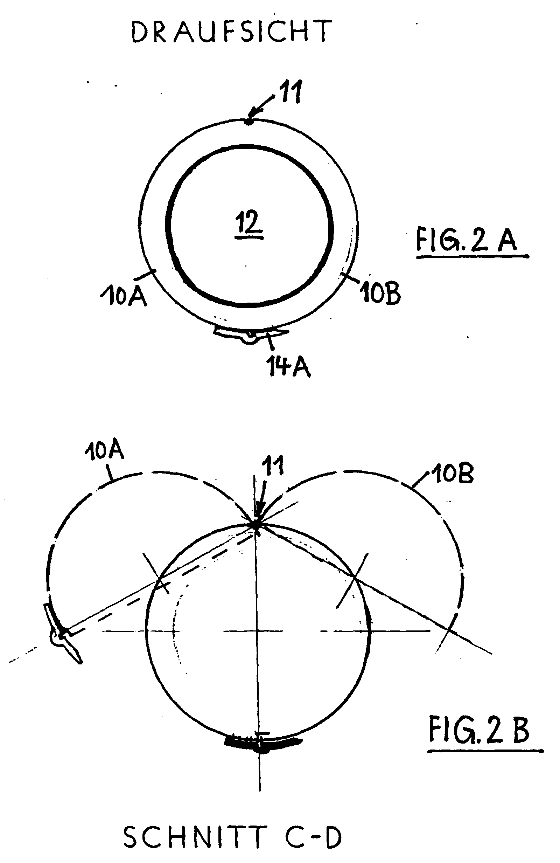

- Fig. 2A: eine Stirnansicht auf den Behälter,
- Fig. 2B: einen Querschnitt durch den Behälter in geschlossenem und geöffnetem Zustand,
- Fig. 3: eine Aufsicht auf den Behälter in aufgeklapptem Zustand.

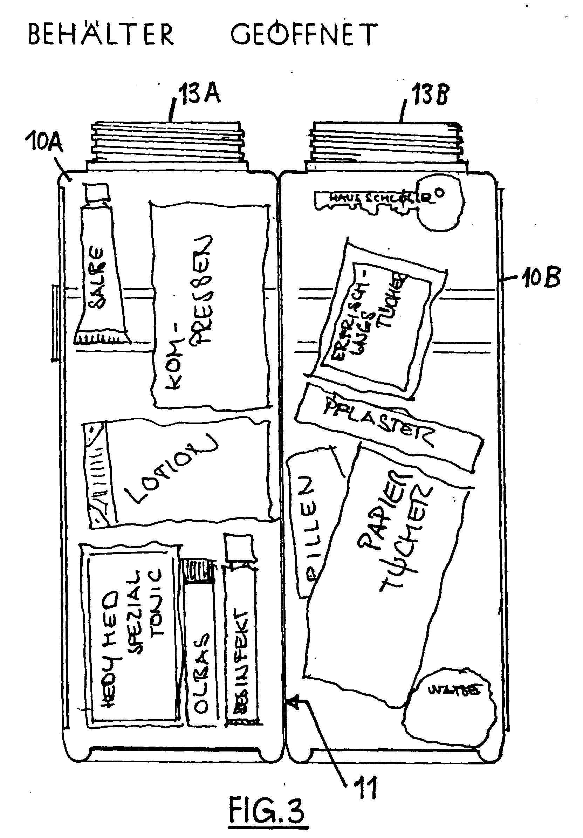

Der Behälter besteht aus einem im wesentlichen zylindrischen Gehäuse 10 mit zwei entlang eines Scharniers 11 klappbaren Hälften 10A, 10B, so daß zwei wannenartige Behälter entstehen, in die die in Fig. 3 beispielhaft bezeichneten Waren und Produkte eingelegt und untergebracht werden können. Insbesondere handelt es sich hierbei um Hygiene-, Verbands- und Erste- Hilfe- Artikel, wie beispielsweise Heftpflaster, Scheren- Messer- Kombination Wundschnellverband, Einmalhandschuhe, Desinfektionsspray, Feucht- und Reinigungstücher, Salben oder Stift gegen Insektenstiche, Wund- und Heilsalbe oder auch Gegenstände des jeweils persönlichen medizinischen Bedarfs.

Es versteht sich von selbst, daß der Behälter auch für andere Zwecke dienen kann, z.B. zur Aufnahme von Fahrrad-Flick- oder Werk- Zeug, Brillenetuis, Geldbörsen, Hausschlüssel, Handy mit Ladegerät oder auch Getränkedosen bis zu einer Größe von 0,33 ml.

Die beiden Gehäusehälften können mittels Laschen 14A, 14B, die über das Scharnier 11 geklappt werden können, verschlossen werden, jedoch kann hierzu auch vorgesehen sein, daß als bevorzugtes Verschlußelement ein Schraubverschluß 12 dient, der über einen stirnseitigen Stutzen 13 schraubbar ist mit einem entsprechenden Schraubgewinde, der in zwei Hälften 13A, 13B aufgeteilt ist, die jeweils einstückig mit einer der beiden Hälften 10A, 10B des Gehäuses ausgeführt sind.

Der ansonsten bei einer "echten" Fahrrad-Trinkflasche zur Einfüllung und zur Entnahme der Flüssigkeit vorgesehene Schraubverschluß dient hier also als separates und ggf. auch einziges Verschlußelement zur Halterung der beiden Gehäusehälften im geschlossenen Zustand des Behälters, hat also eine separate Funktion, die er bei einer Original-Fahrrad-Trinkflasche naturgemäß nicht zu erfüllen hat.

## Patentansprüche

1. Behälter zum Transport kleinerer Gegenstände mit dem Fahrrad, dadurch gekennzeichnet, daß er aus einem im wesentlichen zylindrischen Gehäuse (10) besteht, dessen Außenabmessungen so gewählt sind, daß er in eine Fahrrad-Flaschenhalterung einsetzbar ist, und daß das Gehäuse (10) eine verschließbare Entnahmeöffnung aufweist.

2. Behälter nach Anspruch 1, dadurch gekennzeichnet, daß zur Bildung der Entnahmeöffnung das Gehäuse (10) aus zwei Teilen gebildet ist, die mittels eines Gelenks oder Scharniers (11) verbunden sind.

3. Behälter nach Anspruch 2, dadurch gekennzeichnet, daß die beiden Teile des Gehäuses Hälften (10A, 10B) sind.

4. Behälter nach Anspruch 3, dadurch gekennzeichnet, daß die Hälften (10A, 10B) symmetrisch zur Längsebene (X-X) des Gehäuses (10) sind.

5. Behälter nach Anspruch 3 und 4, dadurch gekennzeichnet, daß das Gelenk (11) als Filmscharnier ausgebildet ist, das entlang einer gemeinsamen Mantellinie (X) der beiden Hälften (10A, 10B) verläuft.

6. Behälter nach Anspruch 3, dadurch gekennzeichnet, daß die beiden Hälften (10A,10B) Verschlußelemente zur Halterung des Behälters im geschlossenen Zustand aufweisen.

7. Behälter nach Anspruch 6, dadurch gekennzeichnet, daß ein erstes Verschlußelement ein Schraubverschluß (12) ist, der über einen stirnseitigen Stutzen (13) schraubbar ist, der in zwei Hälften (13A, 13B) aufgeteilt ist, die jeweils einstöckig mit einer der beiden Hälften (10A, 10B) des Gehäuses (10) ausgeführt sind.

8. Behälter nach Anspruch 6, dadurch gekennzeichnet, daß zweite Verschlußelemente aus zwei Laschen (14A, 14B) gebildet sind, die die beiden Hälften (10A, 10B) des Gehäuses (10) übergreifen und zusammenhalten.
